# EUROPÄISCHE PATENTSCHRIFT

(11) **EP 0 760 151 B1**
(45) Veröffentlichungstag und Bekanntmachung des Hinweises auf die Patenterteilung: **20.01.1999**
(21) Anmeldenummer: 95919450.7
(22) Anmeldetag: 12.05.1995
(51) Int. Cl.: G10L 5/06, G10L 7/08, G10L 9/06

(54) **VERFAHREN ZUR ERKENNUNG VON SPRACHSIGNALEN UND ANORDNUNG ZUM DURCHFÜHREN DES VERFAHRENS**
PROCESS FOR RECOGNISING VOICE SIGNALS AND DEVICE FOR IMPLEMENTING IT
PROCEDE DE RECONNAISSANCE DE SIGNAUX VOCAUX ET SYSTEME DE MISE EN OEUVRE DUDIT PROCEDE

(30) Priorität: 19.05.1994 DE 4417557
(43) Veröffentlichungstag der Anmeldung: 05.03.1997
(73) Patentinhaber: Daimler-Benz Aerospace Aktiengesellschaft, 81663 München (DE)
(72) Erfinder: STÖLZLE, Anton, D-89264 Weissenhorn (DE)
(74) Vertreter: Fröhling, Werner, Dr.
(86) Internationale Anmeldenummer: EP9501810
(87) Internationale Veröffentlichungsnummer: WO9532498

(56) Entgegenhaltungen:
- EP-A- 0 283 743
- EP-A- 0 504 485
- EP-A- 0 535 380

## Beschreibung

Die Erfindung betrifft ein Verfahren zur Erkennung von Sprachsignalen gemäß Oberbegriff des Patentanspruchs 1 sowie eine Anordnung zum Durchführen des Verfahrens gemäß Oberbegriff des Patentanspruchs 8.

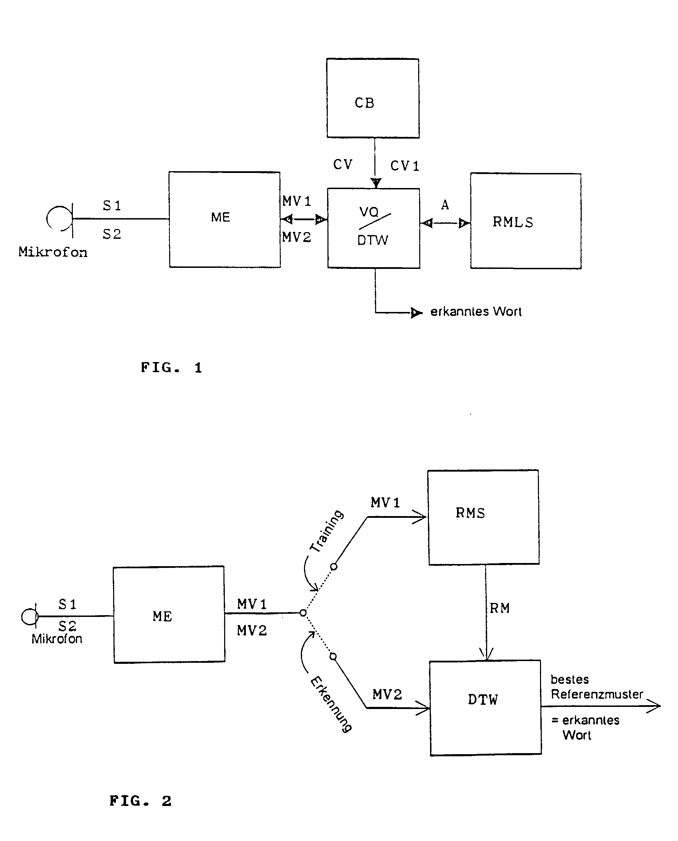

Aus W.Drews, R.Laroia, J.Pandel, A.Schumacher, A.Stoelzle: "A CMOS Processor for a 1000 Word Speech Recognition System"; in: Proceedings of the IEEE Custom Integrated Circuits Conference, Portland, Oregon, May 4-7, 1987, Seiten 559 - 562 ist ein Sprachsignalerkennungssystem bekannt (vgl. FIG. 2), bei dem in einer Trainingsphase, die der eigentlichen Betriebsphase vorgeschaltet ist, Referenz-Sprachsignale (S1 in FIG. 2), die den zu erkennenden Sprachsignalen (S2 in FIG. 2) entsprechen, zunächst z.B. über ein Mikrofon einem Merkmalsextraktor (ME in FIG. 2) zugeleitet und dort mittels eines Merkmalsextraktionsverfahrens in Merkmalsvektoren (MV1 in FIG. 2) zerlegt werden. Hierzu wird der Zeitverlauf der einzelnen Referenz-Sprachsignale (S1 in FIG. 2) in mehrere, zeitlich aufeinander folgende Abschnitte unterteilt und zu jedem Zeitabschnitt typische Merkmale, wie Frequenz, Amplitude usw., in einem Merkmalsvektor (MV1 in FIG. 2) zusammengefaßt. Diese Abfolge von Merkmalsvektoren (MV1 in FIG. 2) der einzelnen Referenz-Sprachsignale (S1 in FIG. 2) werden als Referenzmuster (RM in FIG. 2) in einem Referenzmusterspeicher (RMS in FIG. 2) abgespeichert. Nach Abschluß der Trainingsphase gibt es dann für jedes zu erkennende Sprachsignal (S2 in FIG. 2) aus einer Gruppe vorgegebener Sprachsignale ein entsprechendes Referenzmuster (RM in FIG. 2), das aus mehreren Merkmalsvektoren (MV1 in FIG. 2) besteht und in dem Referenzmusterspeicher (RMS in FIG. 2) abgespeichert ist.

In der anschließenden Betriebsphase werden die zu erkennenden Sprachsignale (S2 in FIG. 2), die ebenfalls aus der Gruppe der vorgegebenen Sprachsignale stammen, über das Mikrofon einer Klassifizierungseinheit (DTW in FIG. 2; DTW = Dynamic Time Warping) zugeleitet und dort mit den abgespeicherten Referenzmustern (RM in FIG. 2) verglichen, die aus dem Referenzmusterspeicher (RMS in FIG. 2) ebenfalls komplett der Klassifizierungseinheit (DTW in FIG. 2) zugeleitet werden.

Ein wesentlicher Nachteil dieses Systems besteht darin, daß für die Abspeicherung kompletter Referenzmuster (RM in FIG. 2) und für den Vergleich all dieser Muster mit dem zu erkennenden Sprachsignal (S2 in FIG. 2) eine große Speicherkapazität vorgehalten werden muß, die umso größer ist, je größer die Zahl und ggf. die Länge der zu erkennenden Worte ist. Damit einher geht ein entsprechend erhöhter Rechenaufwand.

Die Aufgabe der Erfindung besteht daher darin, zum einen ein Verfahren der eingangs genannten Art zu schaffen, das mit möglichst wenig Speicherbedarf auskommt und trotzdem bei der Erkennung von Sprachsignalen mit der erforderlichen Zuverlässigkeit arbeitet, und zum anderen eine Anordnung zum Durchführen eines solchen Verfahrens zu schaffen, die mit möglichst geringem Aufwand realisiert werden kann.

Die erfindungsgemäße Lösung ist in bezug auf das zu schaffende Verfahren durch den kennzeichnenden Teil des Patentanspruchs 1 wiedergegeben und in bezug auf die zu schaffende Anordnung durch den kennzeichnenden Teil des Patentanspruchs 8. Die übrigen Ansprüche enthalten vorteilhafte Aus- und Weiterbildungen der Erfindung.

Ein erster Vorteil der Erfindung besteht darin, daß die Speicherkapazität für die Referenzmuster erheblich reduziert ist, da nur noch die Adressen der Clustervektoren und nicht mehr die kompletten Referenzmuster abgespeichert werden.

Ein weiterer Vorteil besteht darin, daß das verwendete Codebuch, in dem die Clustervektoren gespeichert wird, auf einfache Art als ROM(Read Only Memory)-Speicher realisiert werden kann.

Ein dritter Vorteil besteht darin, daß die Vektorquantisierung (in der Trainingsphase) und die Klassifizierung (in der Betriebsphase) auf einem gemeinsamen Datenpfad eingesetzt werden können.

Ein vierter Vorteil besteht in der Möglichkeit, das System für mehrere Sprecher gleichzeitig verwenden zu können, indem der Adressenspeicher in benutzerabhängige Zonen unterteilt wird.

Im folgenden wird die Erfindung anhand der FIG. 1 näher erläutert, die ein bevorzugtes Ausführungsbeispiel des erfindungsgemäßen Spracherkennungssystems zeigt.

Das System besteht aus einem Mikrofon, das mit einem Merkmalsextraktor ME verbunden ist. Der Merkmalsextraktor ME ist ausgangsseitig mit einer Vektorquantisierungs-/Klassifizierungseinheit VQ/DTW verbunden. An die Vektorquantisierungs-/Klassifizierungseinheit VQ/DTW sind ein Codebuch CB und ein Adressenspeicher RMLS (RMLS = Referenz-Muster-Label-Speicher) angeschlossen.

Das System funktioniert wie folgt:
a) in einer der Betriebsphase vorgeschalteten Trainingsphase werden den zu erkennenden vorgegebenen Sprachsignalen S2 entsprechende Referenz-Sprachsignale Sl wie folgt verarbeitet:
   aa) aus dem jeweils zur Verarbeitung anstehenden Referenz-Sprachsignal S1 werden mittels eines Merkmalsextraktionsverfahrens ME erste Merkmalsvektoren MV1 gewonnen;
   ab) die ersten Merkmalsvektoren MV1 werden anschließend einer Vektorquantisierung VQ unterzogen, bei der die einzelnen ersten Merkmalsvektoren MV1 jeweils mit einer Vielzahl von jeweils mit einer Adresse versehenen und in einem Codebuch CB abgespeicherten Clustervektoren CV verglichen werden und jeweils ein erster Clustervektor CV1 ermittelt wird, der bezüglich mindestens eines vorgegebenen Abstandsmaßes die größte Übereinstimmung mit dem jeweiligen ersten Merkmalsvektor MV1 aufweist;
   ac) die Adresse des ermittelten ersten Clustervektors CV1 wird anschließend in einem Adressenspeicher RMLS abgespeichert;
b) in der Betriebs- bzw. Erkennungsphase werden die zu erkennenden Sprachsignale S2 wie folgt verarbeitet:
   ba) aus dem jeweils zur Verarbeitung anstehenden Sprachsignal S2 werden mittels des Merkmalsextraktionsverfahrens ME zweite Merkmalsvektoren MV2 gewonnen;
   bb) die zweiten Merkmalsvektoren MV2 werden anschließend einer Klassifizierung DTW unterzogen, bei der die einzelnen zweiten Merkmalsvektoren MV2 mit den durch die im Adressenspeicher RMLS abgespeicherten Adressen gekennzeichneten ersten Clustervektoren CV1 verglichen werden;
   bc) anhand des Vergleichs aller zweiten Merkmalsvektoren MV2 des zu erkennenden Sprachsignals S2 werden diejenigen Clustervektoren aus der Menge der ersten Clustervektoren CV1 bestimmt, die einem der vorgegebenen Referenz-Sprachsignale S1 zugeordnet sind und die als Gruppe von Vektoren bezüglich des mindestens einen vorgegebenen Abstandsmaßes die größte Übereinstimmung mit der Gruppe der zweiten Merkmalsvektoren MV2 aufweisen;
   bd) das dieser Gruppe von Clustervektoren zugeordnete Referenz-Sprachsignal S1 wird als das zu erkennende Sprachsignal S2 identifiziert und weiter verarbeitet.

Bei diesem Verfahren erfolgt die Vektorquantisierung VQ (während der Trainingsphase) also auf dem gleichen Datenpfad wie die Klassifizierung DTW (während der Betriebs- bzw. Erkennungsphase).

Das erkannte Sprachsignal kann beispielsweise als Wort auf einem Bildschirm angezeigt werden oder über eine nachgeschaltete Sprachbildungseinheit als Wort ausgesprochen werden. Denkbar ist jedoch auch, daß anstelle von oder in Ergänzung zu dem erkannten Wort davon abgeleitete Signale, z.B. elektrische Steuersignale, generiert werden, die z.B. eine Maschine oder einen Prozeß in Gang setzen oder stoppen.

Als Abstandsmaß können verschiedene Abstandsmaße, z.B. der lineare Abstand bzw. der euklidische (d.h. quadratische) Abstand, verwendet werden, als Codebuch CB z.B. ein lineares oder ein strukturell geordnetes Codebuch, insbesondere ein binär oder tertiär geordnetes Codebuch. Unter einem strukturell geordneten Codebuch ist ein Codebuch zu verstehen, bei dem die einzelnen Clustervektoren nach bestimmten Ordnungsmerkmalen geordnet abgespeichert sind, so daß das Auffinden der einzelnen Clustervektoren mit Hilfe spezieller, auf diese Struktur abgestimmter Suchstrategien schneller erfolgen kann (beispielsweise kann das Codebuch nach Art eines Baumes strukturiert werden).

Das Codebuch CB kann fest vorgegeben werden bezüglich seines Inhalts und/oder seiner Struktur. Denkbar ist aber auch, daß das Codebuch sich adaptiv anpaßt.

Die Erfindung ist nicht auf das dargestellte Ausführungsbeispiel beschränkt, sondern vielmehr auf andere übertragbar. So ist es z.B. denkbar, die Vektorquantisierung benutzerspezifisch anzupassen. Wenn beispielsweise nur Männer oder nur Frauen das System benutzen, ist die erforderliche Codebuchkapazität bei gleicher Zahl von zu erkennenden Worten entsprechend geringer, da die den Stimmlagen des jeweils anderen Geschlechts entsprechenden Clustervektoren entfallen.

## Patentansprüche

1. Verfahren zur Erkennung von Sprachsignalen, gekennzeichnet durch folgende Merkmale:
a) in einer der Betriebsphase vorgeschalteten Trainingsphase werden den zu erkennenden vorgegebenen Sprachsignalen (S2) entsprechende Referenz-Sprachsignale (S1) wie folgt verarbeitet:
aa) aus dem jeweils zur Verarbeitung anstehenden Referenz-Sprachsignal (S1) werden mittels eines Merkmalsextraktionsverfahrens (ME) erste Merkmalsvektoren (MV1) gewonnen;
ab) die ersten Merkmalsvektoren (MV1) werden anschließend einer Vektorquantisierung (VQ) unterzogen, bei der die einzelnen ersten Merkmalsvektoren (MV1) jeweils mit einer Vielzahl von jeweils mit einer Adresse versehenen und in einem Codebuch (CB) abgespeicherten Clustervektoren (CV) verglichen werden und jeweils ein erster Clustervektor (CV1) ermittelt wird, der bezüglich mindestens eines vorgegebenen Abstandsmaßes die größte Übereinstimmung mit dem jeweiligen ersten Merkmalsvektor (MV1) aufweist;
ac) die Adresse (A) des ermittelten ersten Clustervektors (VC1) wird anschließend in einem Adressenspeicher (RMLS) abgespeichert;
b) in der Betriebs- bzw. Erkennungsphase werden die zu erkennenden Sprachsignale (S2) wie folgt verarbeitet:
ba) aus dem jeweils zur Verarbeitung anstehenden Sprachsignal (S2) werden mittels des Merkmalsextraktionsverfahrens (ME) zweite Merkmalsvektoren (MV2) gewonnen;
bb) die zweiten Merkmalsvektoren (MV2) werden anschließend einer Klassifizierung (DTW) unterzogen, bei der die einzelnen zweiten Merkmalsvektoren (MV2) mit den durch die im Adressenspeicher (RMLS) abgespeicherten Adressen (A) gekennzeichneten ersten Clustervektoren (CV1) verglichen werden;
bc) anhand des Vergleichs aller zweiten Merkmalsvektoren (MV2) des zu erkennenden Sprachsignals (S2) werden diejenigen Clustervektoren aus der Menge der ersten Clustervektoren (CV1) bestimmt, die einem der vorgegebenen Referenz-Sprachsignale (S1) zugeordnet sind und die als Gruppe von Vektoren bezüglich des mindestens einen vorgegebenen Abstandsmaßes die größte Übereinstimmung mit der Gruppe der zweiten Merkmalsvektoren (MV2) aufweisen;
bd) das dieser Gruppe von Clustervektoren zugeordnete Referenz-Sprachsignal (S1) wird als das zu erkennende Sprachsignal (S2) identifiziert und weiter verarbeitet.

2. Verfahren nach Anspruch 1, dadurch gekennzeichnet, daß als Abstandsmaß der lineare Abstand und/oder der euklidische Abstand verwendet wird und/oder daß als Codebuch (CB) ein lineares oder strukturell geordnetes Codebuch, insbesondere ein binär oder tertiär geordnetes Codebuch, verwendet wird.

3. Verfahren nach einem der vorhergehenden Ansprüche, dadurch gekennzeichnet, daß das Codebuch (CB) in seiner Struktur und/oder seinem Inhalt fest vorgegeben wird oder adaptiv nachgeregelt wird.

4. Verfahren nach einem der vorhergehenden Ansprüche, dadurch gekennzeichnet, daß die Vektorquantisierung (VQ) benutzerspezifisch, insbesondere geschlechtsspezifisch angepaßt wird.

5. Verfahren nach einem der vorhergehenden Ansprüche, dadurch gekennzeichnet, daß eine harte oder weiche Vektorquantisierung (VQ) durchgeführt wird.

6. Verfahren nach einem der vorhergehenden Ansprüche, dadurch gekennzeichnet, daß die Vektorquantisierung (VW) und die Klassifizierung (DTW) auf dem gleichen Datenpfad erfolgt.

7. Verfahren nach einem der vorhergehenden Ansprüche, dadurch gekennzeichnet, dap in der Trainingsphase Referenz-Sprachsignale (S2) mehrerer Benutzer verarbeitet werden.

8. Anordnung zur Durchführung des Verfahrens nach einem der vorhergehenden Ansprüche, dadurch gekennzeichnet,
- daß die zu erkennenden Sprachsignale (S2) bzw. die zugeordneten Referenz-Sprachsignale (S1) einem Merkmalsextraktor (ME) zugeleitet sind;
- daß der Merkmalsextraktor (ME) ausgangsseitig mit einer Vektorquantisierungs-/Klassifizierungs-Einheit (VQ/DTW) verbunden ist;
- daß mindestens ein Codebuch (CB) und mindestens ein Adressenspeicher (RMLS) an die Vektorquantisierungs-/ Klassifizierungs-Einheit (VQ/DTW) angeschlossen ist;
- daß die Vektorquantisierungs-/Klassifizierungs-Einheit (VQ/DTW) ausgangsseitig mit einer Signal-Weiterverarbeitungseinheit verbunden ist.

## Claims

1. Method of recognising speech signals, characterised by the following features:
a) reference speech signals (S1) corresponding to the predetermined speech signals (S2) to be recognised are processed as follows in a training phase preceding the operating phase:
aa) first feature vectors (MV1) are obtained by means of a feature extraction process (ME) from the reference signals (S1) respectively present for processing;
ab) the first feature vectors (MV1) are subsequently subjected to a vector quantisation (VQ) in which the individual first feature vectors (MV1) are respectively compared with a plurality of cluster vectors (CV), which are each provided with an address and are stored in a code book (CB), and each time a first cluster vector (CV1) is ascertained which with respect to at least one predetermined difference criterion has the greatest correspondence with the respective first feature vector (MV1);
ac) the address (A) of the ascertained first cluster vector (VC1) is subsequently stored in an address store (RMLS);
b) in the operating or recognition phase the speech signals (S2) to be recognised are processed as follows:
ba) second feature vectors (MV2) are obtained by means of the feature extraction process (ME) from the speech signals (S2) respectively present for processing;
bb) the second feature vectors (MV2) are subsequently subjected to a classification (DTW), in which the individual second feature vectors (MV2) are compared with the first cluster vectors (CV1) characterised by the addresses (A) stored in the address store (RMLS);
bc) on the basis of the comparison of all second feature vectors (MV2) of the speech signal (S2) to be recognised, those cluster vectors from the quantity of first cluster vectors (CV1) are determined which are associated with one of the predetermined reference speech signals (S1) and which as a group of vectors have with respect to the at least one predetermined difference criterion the greatest correspondence with the group of the second feature vectors (MV2); and
bd) the reference speech signal (S1) associated with this group of cluster vectors is identified as the speech signal (S2) to be recognised and is further processed.

2. Method according to claim 1, characterised thereby that the linear spacing and/or the euclidic spacing is used as the difference criterion and/or a linearly or structurally ordered code book, especially a binary or tertiary ordered code book, is used as the code book (CB).

3. Method according to one of the preceding claims, characterised thereby that the code book (CB) is fixedly preset or adaptively adjusted in its structure and/or its content.

4. Method according to one of the preceding claims, characterised thereby that the vector quantisation (VQ) is adapted to be user-specific, especially gender-specific.

5. Method according to one of the preceding claims, characterised thereby that a hard or soft vector quantisation (VQ) is performed.

6. Method according to one of the preceding claims, characterised thereby that the vector quantisation (VQ) and the classification (DTW) take place on the same data path.

7. Method according to one of the preceding claims, characterised thereby that reference speech signals (S1) of several users are processed in the training phase.

8. Arrangement for performing the method according to one of the preceding claims, characterised thereby
- that the speech signals (S2) to be recognised or the associated reference speech signals (S1) are fed to a feature extractor (ME);
- that the feature extractor (ME) is connected at the output with a vector quantisation/classification unit (VQ/DTW);
- that at least one code book (CB) and at least one address store (RMLS) are connected to the vector quantisation/classification unit (VQ/DTW); and
- that the vector quantisation/classification unit (VQ/DTW) is connected at the output with a unit for further signal processing.

## Revendications

1. Procédé de reconnaissance de signaux vocaux, caractérisé par les caractéristiques suivantes:
a) dans une phase d'apprentissage, antérieure à la phase, d'exploitation, des signaux vocaux de référence (S1), correspondant aux signaux vocaux(S2) prescrits à reconnaître, sont traités comme suit:
aa) à partir de chacun des signaux vocaux de référence (S1) qui se présente au traitement sont obtenus, au moyen d'un procédé d'extraction de caractéristique (ME), des premiers vecteurs de caractéristique (MV1) ;
ab) les premiers vecteurs de caractéristique (MV1) sont ensuite soumis à une quantification de vecteur (VQ) dans le cas de laquelle chacun des différents premiers vecteurs de caractéristique (MV1) est comparé à une pluralité de vecteurs de groupage (CV) munis chacun d'une adresse et mémorisés dans un livre de codes (CB) et dans le cas de laquelle est, pour chacun, établi un premier vecteur de groupage (CV1) qui, en ce qui concerne au moins une valeur d'écart prescrite, présente la plus grande coïncidence avec le premier vecteur de caractéristique (MV1) en question;
ac) l'adresse (A) du premier vecteur de groupage (VC1) ainsi établi est ensuite mémorisée dans une mémoire d'adresses (RMLS);
b) dans la phase d'exploitation et de reconnaissance, les signaux vocaux à reconnaître (S2) sont traités comme suit:
ba) à partir de chacun des signaux vocaux (S2) qui se présentent au traitement sont obtenus, au moyen du procédé d'extraction de caractéristique (ME), des seconds vecteurs de caractéristique (MV2);
bb) les seconds vecteurs de caractéristique (MV2) sont ensuite soumis à une classification (DTW) dans le cas de laquelle les différents seconds vecteurs de caractéristique (MV2) sont comparés avec les premiers vecteurs de groupage (CV1) caractérisés par les adresses (A) mémorisées dans la mémoire d'adresses (RMLS);
bc) à l'aide de la comparaison de tous les seconds vecteurs de caractéristique (MV2) du signal vocal à reconnaître (S2) sont déterminés, dans la quantité des premiers vecteurs de groupage (CV1), ceux des vecteurs de groupage qui sont associés à l'un des signaux vocaux de référence (S1) prescrits et qui, en tant que groupe de vecteurs, présentent en ce qui concerne la valeur d'écart prescrite, dont il y a au moins une, la plus grande coïncidence avec le groupe des seconds vecteurs de caractéristique (MV2) ;
bd) le signal vocal de référence (S1) associé à ce groupe de vecteurs de groupage est identifié comme étant le signal vocal (S2) à reconnaître et son traitement se poursuit.

2. Procédé selon la revendication 1, caractérisé par le fait que comme valeur d'écart on emploie l'écart linéaire et/ou l'écart euclidien et/ou que comme livre de codes (CB) on emploie un livre de codes à rangement linéaire ou structurel, en particulier un livre de codes à rangement binaire ou tertiaire.

3. Procédé selon l'une des revendications précédentes, caractérisé par le fait que le livre de codes (CB) est prescrit de façon fixe en structure et/ou en contenu ou bien fait l'objet d'une régulation adaptative ultérieure.

4. Procédé selon l'une des revendications précédentes, caractérisé par le fait que la quantification de vecteurs (VQ) est adaptée de façon spécifique à l'utilisateur et en particulier de façon spécifique à son sexe.

5. Procédé selon l'une des revendications précédentes, caractérisé par le fait que c'est une quantification de vecteur (VQ) rigide ou souple qui est effectuée.

6. Procédé selon l'une des revendications précédentes, caractérisé par le fait que la quantification de vecteurs (VW) et la classification (DTW) se font sur le même chemin de données.

7. Procédé selon l'une des revendications précédentes, caractérisé par le fait que dans la phase d'apprentissage, des signaux vocaux de référence (S2) de plusieurs utilisateurs sont traités.

8. Système de mise en oeuvre du procédé selon l'une des revendications précédentes, caractérisé par le fait
- que les signaux vocaux (S2) à reconnaître ou les signaux vocaux de référence (S1) associés sont amenés à un extracteur de caractéristique (ME);
- que l'extracteur de caractéristique (ME) est relié, du côté de la sortie, à un organe de quantification de vecteur/de classification (VQ/DTW);
- qu'au moins un livre de codes (CB) et au moins une mémoire d'adresses (RMLS) sont reliés à l'organe de quantification de vecteurs/de classification (DTW);
- que l'organe de quantification de lecteur/de classification (VQ/DTW) est relié, du côté de la sortie, à un organe de poursuite de traitement du signal.
